# EUROPÄISCHE PATENTSCHRIFT

(11) **EP 3 315 046 B1**
(45) Veröffentlichungstag und Bekanntmachung des Hinweises auf die Patenterteilung: **01.12.2021**
(21) Anmeldenummer: 17197424.9
(22) Anmeldetag: 20.10.2017
(51) Int. Cl.: A47B 21/06, H02G 3/04

(54) **KABELFÜHRUNGSEINRICHTUNG SOWIE MÖBEL UND GESTELL MIT EINER SOLCHEN**
CABLE GUIDING DEVICE, AND FURNITURE AND ASSEMBLY WITH SAME
DISPOSITIF GUIDE-CÂBLE ET MEUBLE ET CHÂSSIS LE COMPRENANT

(30) Priorität: 21.10.2016 EP 16195093
(43) Veröffentlichungstag der Anmeldung: 02.05.2018
(73) Patentinhaber: Vitra AG, 4127 Birsfelden (CH)
(72) Erfinder: Keller, Stefan, 79585 Steinen - Hofen (DE); Schütt, Helmut, 79379 Mülllheim - Hügelheim (DE)
(74) Vertreter: Latscha Schöllhorn Partner AG

(56) Entgegenhaltungen:
- WO-A1-2011/000028
- WO-A1-2013/132710
- WO-A2-2014/151755
- DE-T5-112014 002 906
- GB-A- 191 414 163
- US-A1- 2015 351 530

## Beschreibung

### Technisches Gebiet

Die Erfindung betrifft ein höhenverstellbares Möbel mit insbesondere einer Kabelführungseinrichtung zum Ordnen und Führen von Kabeln an dem Möbel und ein Gestell beziehungsweise Tischgestell für ein solches Möbel.

### Stand der Technik

In Verwendung vieler Möbel und insbesondere Büromöbel wie beispielsweise Schreib- beziehungsweise Arbeitstische ist es notwendig elektronische Geräte zu verkabeln. Beispielsweise werden typischerweise Peripheriegeräte von Computern wie Bildschirme, Tastaturen und Computermäuse auf Tischplatten von Schreibtischen angeordnet, wohingegen die Computer selbst unter den Tischplatten aufgestellt sind und die Stromzufuhr entlang des Bodens beziehungsweise von unten her erfolgt. Die Stromkabel und Kommunikationskabel werden also häufig von unten her auf das Möbel wie beispielsweise auf die Tischplatte geführt.

Mit zunehmender Anzahl verkabelter Geräte auf dem Möbel wird es schwieriger die Kabel sauber und geordnet auf das Möbel zu führen. Dazu ist es bekannt, die Kabel in einem Rohr oder einem Schlauch geordnet zusammenzufassen und den ganzen Kabelstrang umhüllt auf das Möbel zu führen.

Unabhängig von der Verkabelung sind seit längerer Zeit auch höhenverstellbare Möbel insbesondere als Arbeitsplätze wie höhenverstellbare Schreibtische bekannt. Durch die Möglichkeit, eine Arbeitsplatte des Arbeitsplatzes in der Höhe, d.h. in vertikaler Richtung, zu verstellen, kann der Arbeitsplatz einer Körpergrösse einer an ihm arbeitenden Person optimal angepasst werden, was eine wichtige Voraussetzung für eine ergonomische Arbeitshaltung sein kann.

Während früher eine Höhenverstellbarkeit häufig nur in relativ beschränktem Umfang möglich war, um Grössenunterschiede im Bereich der statistisch relativ geringen Standardabweichung der Körpergrösse sitzender erwachsener Personen ausgleichen zu können, erfreuen sich heutzutage auch Schreibtische mit erweiterter Höhenverstellbarkeit, welche bei Bedarf ein Arbeiten im Stehen ermöglichen, grosser Beliebtheit. Da längeres Arbeiten im Stehen aber als unangenehm und/oder ermüdend empfunden werden kann, ist es wichtig, dass eine schnelle und komplikationslose Verstellbarkeit zwischen Höhen der Arbeitsplatte, welche für ein Arbeiten im Stehen geeignet sind und solchen, welche für ein Arbeiten im Sitzen geeignet sind, möglich ist. Insbesondere ein häufiges Verstellen der vertikalen Position sollte problemlos möglich sein.

Bei solchen höhenverstellbaren Möbeln ist aber das eingangs erwähnte geordnete Führen von Kabeln zusätzlich erschwert. Um weder die Höhenverstellbarkeit des Möbels noch die Verfügbarkeit der verkabelten Einrichtungen auf dem zu beeinträchtigen, müssen die Kabel lange genug sein, um in einer höchstmöglichen Einstellung des Möbels auf das Möbel zu reichen. Entsprechend werden bei höhenverstellbaren Möbeln typischerweise verhältnismässig lange Kabel eingesetzt. Werden die Möbel jedoch nach unten gestellt beziehungsweise befinden sich die mit solchen verhältnismässig langen Kabeln ausgestatteten Möbel nicht in ihrer höchsten Stellung, so verlaufen die Kabel zumeist eventuell in einem Kabelschlauch zusammengefasst in eine beliebige Richtung. Insbesondere können die Kabel in einem gewissen Umfang umherschlenkern, was ein Ordnen der Kabel erschwert und einen Benutzer des Möbels beziehungsweise des Schreibtischs stört. Zudem könne die Kabel bei mehrfacher Höhenverstellung immer wieder anders zusammengefaltet werden, was zu einem Verheddern oder zu einem Knicken der Kabel führen kann. Dadurch können die Kabel beschädigt werden.

Aus der US 2015/0351530 A1 ist weiterhin ein Kabelverwaltungssystem für Möbel bekannt, welches ein längliches flexibles Element umfasst, an dem mehrere Kabelklemmelemente angebracht sind, um es an mehreren Kabeln zu befestigen, um die Kabel in der Nähe des länglichen Elements zu halten. Das längliche flexible Element ist elastisch und zur Befestigung an einem Möbelstück, beispielsweise einem Tisch, konfiguriert, das vertikal von einer ersten abgesenkten Position zu einer zweiten angehobenen Position beweglich ist. Wenn sich das Möbelstück beispielsweise in der angehobenen Position befindet, kann das längliche Element zu einer ersten Position verlängert werden, in der das Element etwa eine "S"-Form annimmt und wenn sich das Möbelstück in der abgesenkten Position befindet, kann das längliche Element etwa zu einer komprimierten "S"-artigen Form zusammengedrückt werden.

Aufgabe der nachfolgenden Erfindung ist es daher, eine Einrichtung beziehungsweise ein System vorzuschlagen, mit der beziehungsweise dem Kabel an höhenverstellbaren Möbeln in jeder Höhenstellung geordnet und sauber geführt sind.

### Darstellung der Erfindung

Die Aufgabe wird erfindungsgemäss durch ein höhenverstellbares Möbel, wie es durch die Merkmale des unabhängigen Anspruchs 1 definiert ist gelöst. Vorteilhafte Ausführungsvarianten der Erfindung ergeben sich aus den abhängigen Ansprüchen.

Das Wesen der Erfindung besteht im Folgenden: Ein höhenverstellbares Möbel mit einem auf dem Boden abstellbaren Fussteil, einem Oberteil, einer Stelleinrichtung und einer Kabelführungseinrichtung zur geordneten Führung von Kabeln an dem Möbel, wobei ein Abstand zwischen dem Fussteil und dem Oberteil mittels der Stelleinrichtung veränderbar ist. Die Kabelführungseinrichtung umfasst ein starres erstes Führungselement, ein starres zweites Führungselement und ein verformbares Verbindungselement. Das erste und das zweite Führungselement weisen jeweils eine erste beziehungsweise zweite scharniergelenkartige Lagereinrichtung auf, mittels welcher sie jeweils am Oberteil bzw. am Fussteil des Möbels gelenkig oder gelenkartig gelagert sind, wobei die erste bzw. die zweite Lagereinrichtung jeweils einen Achstangenabschnitt umfassen, welcher sich durch eine Führung im Oberteil bzw. im Fussteil des Möbels erstreckt. Das Verbindungselement verbindet das erste Führungselement mit dem zweiten Führungselement zueinander bewegbar.

Im Zusammenhang mit der Erfindung kann sich der Begriff "Kabel" insbesondere auf Drähte und Verbindungsleitungen wie Stromkabel, Anschlusskabel oder dergleichen beziehen. Er kann aber auch andere kabelähnliche Strukturen wie Schnüre oder dergleichen umfassen, die typischerweise wickelbar sind.

Die erste und zweite Lagereinrichtung können insbesondere ermöglichen, dass die Führungselemente gelenkig oder gelenkartig mit dem Oberteil beziehungsweise dem Fussteil verbunden sind. Dies ermöglicht, dass die Führungselemente je nach Höhenposition des Oberteils zum Fussteil unterschiedlich geschwenkt sind. Insbesondere können die ersten und zweiten Führungselemente verhältnismässig stark eingeschwenkt sein, wenn Ober- und Fussteil verhältnismässig nahe beieinander sind beziehungsweise wenn sich das Oberteil in einer verhältnismässig tiefen Höhenstellung befindet. Analog dazu können die ersten und zweiten Führungselemente verhältnismässig stark ausgeschwenkt sein, wenn Ober- und Fussteil verhältnismässig weit weg von einander sind beziehungsweise wenn sich das Oberteil in einer verhältnismässig hohen Höhenstellung befindet. Bildlich gesprochen können das erste Führungselement, das zweite Führungselement und das Verbindungselement zusammen beinartig ausgebildet sein, wobei das erste Führungselement einem Oberschenkel, das zweite Führungselement einem Unterschenkel und das Verbindungselement einem Knie entspricht.

Dabei können die ersten und zweiten Lagereinrichtungen beispielsweise scharniergelenkartig ausgebildet sein. Auch können sie jeweils ein Achselement wie beispielsweise einen Achsstangenabschnitt umfassen, die sich durch eine entsprechende Öffnung, Bohrung oder andere Führung im zugehörigen Oberteil beziehungsweise Fussteil erstrecken.

Der Begriff "starr" im Zusammenhang mit der Erfindung kann sich darauf beziehen, dass die ersten und zweiten Führungselemente im Wesentlichen formstabil sind. Das heisst, sie können ihre Form im Raum im Wesentlichen beibehalten, auch wenn sie Kabel oder anders tragen. Dabei können sie in einem gewissen Umfang auch elastisch oder deformierbar sein, solange sie ihre Grundform beziehungsweise ihre vordefinierte Form im Wesentlichen beibehalten können.

Im Gegensatz dazu ist das Verbindungselement verformbar beziehungsweise deformierbar. Insbesondere kann das Verbindungselement im Vergleich zu den ersten und zweiten Führungselementen verformbar sein. Wenn das erste und das zweite Führungselement über das Verbindungselement miteinander verbunden sind, kann bei einer Bewegung des ersten und des zweiten Führungselements zueinander das Verbindungselement verformt werden, wohingegen die beiden Führungselemente ihre Form im Wesentlichen beibehalten.

Die Kabelführungseinrichtung ermöglicht, dass ein Verlauf der Kabel vom Oberteil des Möbels zum Fussteil des Möbels beziehungsweise umgekehrt in jeder insbesondere vertikalen Stellung des Oberteils zum Unterteil vordefiniert ist. Dabei kann auch eine Weglänge des Kabels zwischen Ober- und Fussteil im Wesentlichen konstant gehalten werden. Dadurch kann erreicht werden, dass sich die Kabel in jeder Höhenposition des Oberteils zum Fussteil immer an einem Ort befinden, an dem sie einen Nutzer wenig stören und an dem sie auch sonst wenig im Weg sind beziehungsweise gar eingeklemmt werden können. Zudem kann so verhindert werden, dass die Kabel unstrukturiert und immer wieder anders geformt beziehungsweise zusammengefaltet werden. So kann eine Beschädigung der Kabel beispielsweise durch ein Knicken oder ein Verheddern der Kabel (Kabelsalat) vermieden werden. Insbesondere ermöglicht die erfindungsgemässe Kabelführungseinrichtung also, dass Kabel an beziehungsweise in höhenverstellbaren Möbeln in jeder Höhenstellung geordnet und sauber geführt sind.

Vorzugsweise ist das Verbindungselement elastisch verformbar. Dies ermöglicht, dass die beiden Führungselemente wiederkehrend in ihre Ausgangsstellung relativ zueinander bewegt werden. Insbesondere kann so einfach erreicht werden, dass die beiden Führungselemente in jeder Höhenposition des Oberteils zum Unterteil vordefiniert und wiederholbar zueinander ausgerichtet beziehungsweise positioniert sind.

Dabei ist das Verbindungselement vorzugsweise federnd ausgestaltet. Dies ermöglicht ein effizientes und stabiles elastisches Verformen des Verbindungselements. Dabei weist das Verbindungselement mit Vorteil eine Spiralfeder auf. Eine solche Spiralfeder ermöglicht eine effiziente und stabile Ausführung des Verbindungselements in federnder beziehungsweise elastischer Ausführung.

Vorzugsweise sind das erste Führungselement und das zweite Führungselement längsförmig ausgebildet. Solche längsförmigen Führungselemente ermöglichen ein geordnetes Führen der Kabel in einen Bereich, in dem sie wenig störend sind. Beispielsweise können sie in einem höhenverstellbaren Tisch ermöglichen, dass die Kabel in einen hinteren Beinbereich geführt werden, wo sie einen Nutzer des Tischs nicht stören.

Vorzugsweise sind dabei die erste Lagereinrichtung nahe eines ersten Längsendes des ersten Führungselements angeordnet, die zweite Lagereinrichtung nahe eines ersten Längsendes des zweiten Führungselements angeordnet und das Verbindungselement dazu ausgestaltet, ein zweites Längsende des ersten Führungselements mit einem zweiten Längsende des zweiten Führungselements zu verbinden. Dabei weisen das erste Führungselement und das zweite Führungselement mit Vorteil jeweils einen Stangenabschnitt auf. Eine solche Ausgestaltung der Führungselemente und des Verbindungselements ermöglichen ein einfache und effiziente Ausführung der erfindungsgemässen Kabelführungseinrichtung insbesondere in einer knieartigen beziehungsweise beinartigen Gestalt.

Vorzugsweise umfasst die Kabelführungseinrichtung eine Umhüllung, mit der das erste Führungselement, das zweite Führungselement und das Verbindungselement einfassbar sind. Mit einer solchen Umhüllung können die Führungselemente, das Verbindungselement und die Kabel ummantelt beziehungsweise eingepackt werden. Dies ermöglicht ein einfaches und sauberes Zusammenfassen der Kabelführungseinrichtung, was auch aus ästhetischen Gründen vorteilhaft sein kann.

Dabei ist die Umhüllung vorzugsweise schlauchartig ausgebildet. Eine solche schlauchartige Umhüllung beziehungsweise ein Kabelschlauch ermöglichen eine einfache Ausgestaltung der Umhüllung. Die Umhüllung kann auffaltbar sein, um ein effizientes Einpacken zu ermöglichen. Auch muss sie nicht durchgehend geschlossen sein, sondern kann teilweise geöffnet sein. Dies kann beispielsweise auch bevorzugt sein, um ein sauberes Falten beziehungsweise Einrollen des Kabelschlauchs zu vereinfachen.

Das Möbel kann insbesondere ein Tisch beziehungsweise ein Büro- oder Schreibtisch sein. Es kann auch eine Tischkomposition sein, in der mehrere Arbeitsplätze beziehungsweise Schreibtische zusammengefasst sind. Dabei kann das Oberteil eine Arbeits- oder Tischplatte sein.

Vorzugsweise ist die Kabelführungseinrichtung des erfindungsgemässen Möbels wie oben beschrieben ausgestaltet. Das erfindungsgemässe Möbel ermöglicht eine effiziente Implementierung der oben im Zusammenhang mit der Kabelführungseinrichtung beschriebenen Effekte und Vorteile.

Vorzugsweise ist beim erfindungsgemässen Möbel das erste Führungselement quasi vertikal oberhalb der Lagerung des zweiten Führungselements am Fussteil am Oberteil beziehungsweise am Tragteil gelagert. Eine solche Anordnung ermöglicht eine kniegelenk- beziehungsweise beinartige Ausgestaltung der Kabelführungseinrichtung.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden die erfindungsgemässe Kabelführungseinrichtung beziehungsweise das erfindungsgemässe Möbel beziehungsweise das erfindungsgemässe Gestell unter Bezugnahme auf die beigefügten Zeichnungen anhand von Ausführungsbeispielen detaillierter beschrieben. Es zeigen:
- Fig. 1: eine perspektivische Ansicht eines Ausführungsbeispiels eines erfindungsgemässen Möbels in Form einer Tischkomposition mit einem Gestell mit einer Kabelführungseinrichtung in einer oberen Höheneinstellung;
- Fig. 2: eine perspektivische Ansicht eines detaillierten Ausschnitts einiger Bauteile der Tischkomposition von Fig. 1 in der oberen Höheneinstellung; und

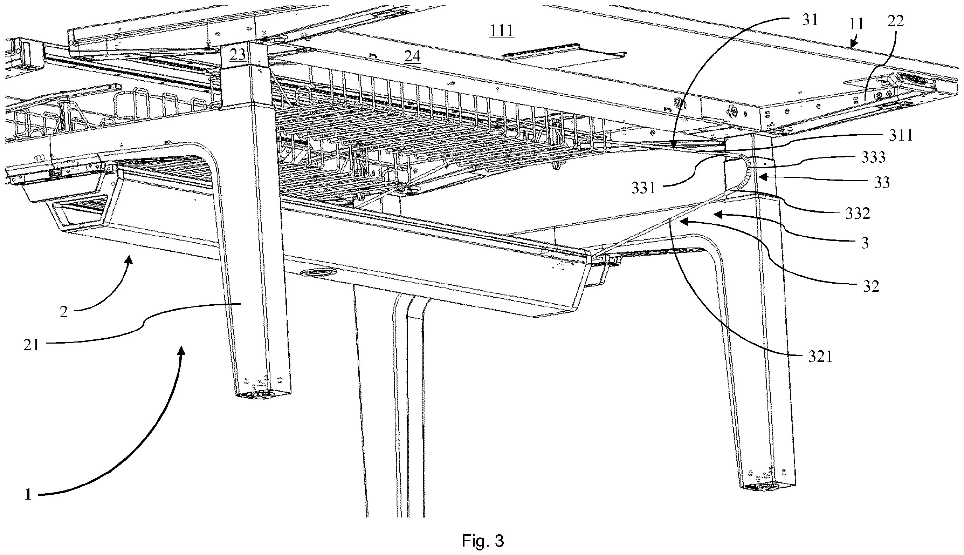

- Fig. 3: eine perspektivische Ansicht eines Ausschnitts der Tischkomposition von Fig. 1 in einer unteren Höheneinstellung.

### Weq(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

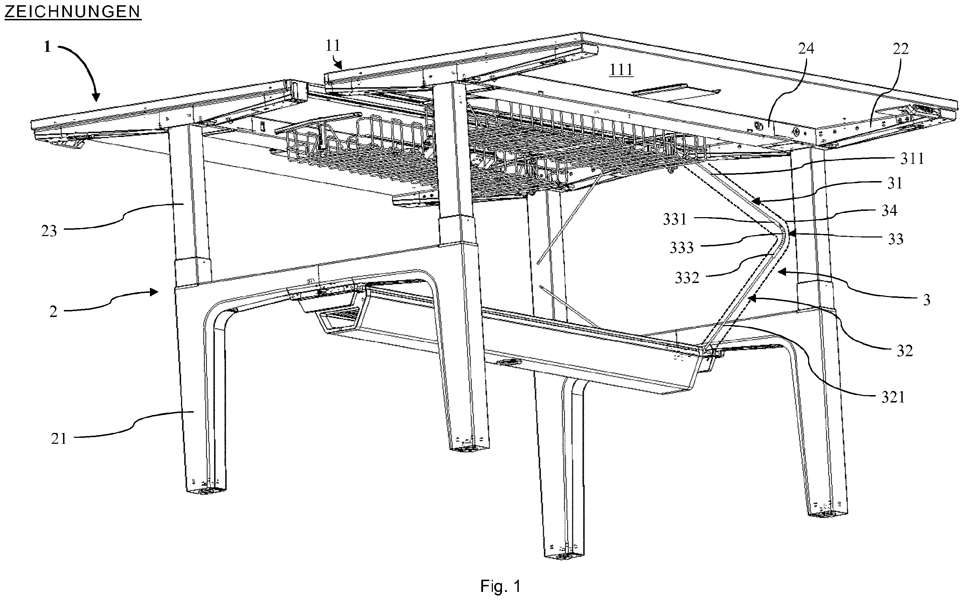

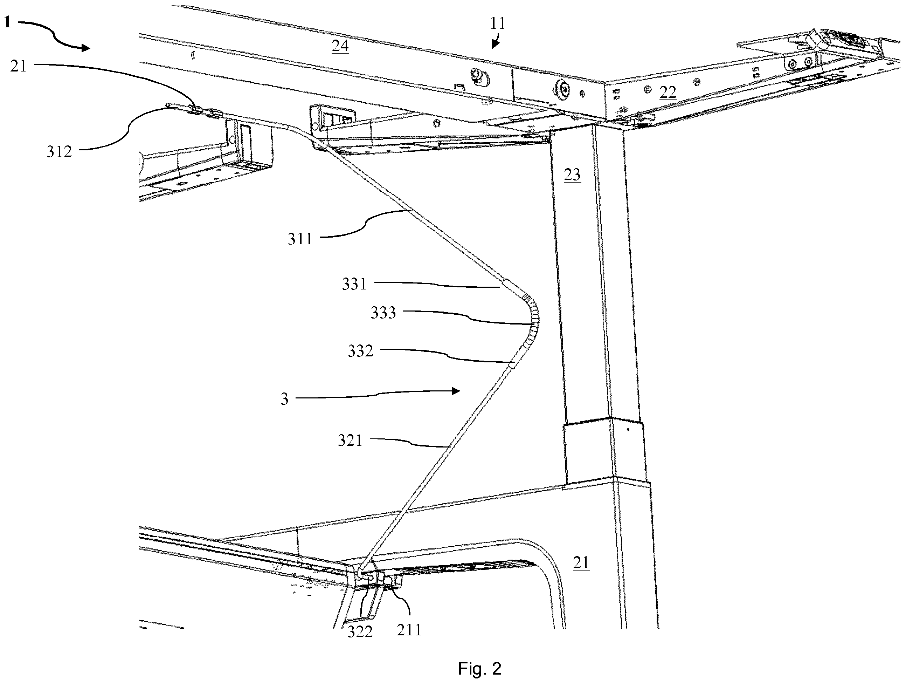

Fig. 1 und Fig. 2 zeigen eine Tischkomposition 1 in einer oberen Höheneinstellung als Ausführungsbeispiel eines erfindungsgemässen Möbels, die ein Gestell 2 mit einer Kabelführungseinrichtung 3 umfasst. Die Tischkomposition 1 umfasst zwei einander gegenüber liegende Schreibtische 11 als Arbeitsplätze. Die Schreibtische 11 umfassen ein gemeinsames Gestell 2 und jeweils eine Tischplatte 111 als Oberteil.

Das Gestell 2 weist zwei parallel ausgerichtete quasi U-förmige Fussteile 21, die jeweils zwei Standfüsse bilden. Das Gestell 2 und somit die Tischkomposition 1 sind also auf vier Standfüssen auf dem Boden aufgestellt. Das Gestell 2 umfasst weiter vier parallel zum zugehörigen Fussteil 21 ausgerichtete Tragteile 22, von denen jeweils zwei mit einer Quertraverse 24 miteinander ortsfest verbunden sind. An den jeweils zwei über eine der Quertraversen 24 verbundenen Tragteilen 22 ist jeweils eine der Tischplatten 111 montiert. Weiter sind die jeweils zwei über einer der Quertraversen 24 verbundenen Tragteile 24 über zwei Teleskopbeine 23 mit den beiden Fussteilen 21 verbunden. Über eine Stelleirichtung sind die beiden Teleskopbeine 23 einer der beiden Tischplatten 111 synchron zusammen ein- und ausfahrbar. Dadurch kann ein Abstand zwischen den jeweiligen Tischplatten 111 und den Fussteilen 21 verändert werden. Die Schreibtische 11 beziehungsweise deren Tischplatten 111 sind so höhenverstellbar.

Das Gestell 2 umfasst weiter zwei Kabelführungseinrichtungen 3, von denen jeweils eine einer der Tischplatten 111 zugeordnet ist und von denen in Fig. 1 nur die vordere vollständig abgebildet ist. Die beiden Kabelführungseinrichtungen 3 sind analog mit jeweils einem längsförmigen starren ersten Führungselement 31 und einem längsförmigen starren zweiten Führungselement 32 ausgestaltet. Die ersten Führungselemente 31 weisen jeweils eine erste schräg beziehungsweise quasi diagonal in Richtung einer vorderen Tischkante verlaufende Führungsstange 311 auf, die an ihrem oberen Längsende in eine sich rechtwinklig von ihr in Richtung Mitte der zugehörigen Tischplatte 111 erstreckende erste Achsstange 312 als Lagereinrichtung übergeht. Die zweiten Führungselemente 32 weisen jeweils eine zweite schräg beziehungsweise quasi diagonal in Richtung der vorderen Tischkante verlaufende Führungsstange 321 auf, die an ihrem unteren Längsende in eine sich rechtwinklig von ihr nach aussen erstreckende zweite Achsstange 322 als Lagereinrichtung übergeht.

Die Kabelführungseinrichtungen 3 umfassen weiter jeweils ein Verbindungselement 33 mit einer Spiralfeder 333, die an ihrem oberen Längsende in eine erste Verbindungshülse 331 und an ihrem unteren Längsende in eine zweite Verbindungshülse 332 übergeht. Die ersten Verbindungshülsen 331 der Verbindungselemente 33 sind jeweils mit dem unteren Längsende der ersten Führungsstange 311 des zugehörigen ersten Führungselements 31 verbunden. Analog dazu sind die zweite Verbindungshülsen 332 der Verbindungselemente 33 jeweils mit dem oberen Längsende der zweiten Führungsstange 321 des zugehörigen zweiten Führungselements 32 verbunden. Die Spiralfeder 333 ist dabei elastisch gebogen und bildet so einen veränderbaren Verbindungswinkel zwischen erstem Führungselement 31 und zweitem Führungselement 32.

Die Fussteile 21 sind ferner mit Lagerbohrungen 211 ausgestattet, wobei die zweiten Achsstangen 322 der zweiten Führungselemente 32 sich jeweils durch zwei Lagerbohrungen 211 hindurch erstrecken. Die zweiten Führungselemente 32 sind dadurch schwenkbar beziehungsweise gelenkig am zugehörigen Fussteil 21 befestigt. An ihren Unterseiten sind die Tischplatten 111 jeweils mit zwei nach unten offenen Lagerhülsen 21 ausgestattet, in welche die erste Achsstange 312 des zugehörigen ersten Führungselements 31 eingeschnappt sind. Die ersten Führungselemente 31 sind dadurch gelenkig beziehungsweise schwenkbar an der zugehörigen Tischplatte 111 befestigt.

Die Kabelführungseinrichtungen 3 umfassen weiter jeweils einen flexiblen Kabelschlauch 34, die jeweils die erste Führungsstange 311 des zugehörigen ersten Führungselements 31, die zweite Führungsstange 321 des zugehörigen zweiten Führungselements 32 und das zugehörige Verbindungselement 33 einfassen beziehungsweise ummanteln. In Anwendung der Kabelführungseinrichtungen 3 sind jeweils auch Kabel, die auf die jeweilige Tischplatte 111 geführt werden, im Kabelschlauch 34 eingepackt.

Das erste Führungselements 31, das Verbindungselement 33 und das zweite Führungselement 32 bilden zusammen jeweils ein Bein, wobei das Verbindungselement 33 das Knie, das erste Führungselement 31 einen Oberschenkel und das zweite Führungselements 32 einen Unterschenkel darstellen. In der in Fig. 1 gezeigten Stellung sind die Tischplatten 111 beispielsweise in einer Stehposition verhältnismässig hoch eingestellt. Die Kabelführungseinrichtungen 3 sind also verhältnismässig gestreckt. Dabei sind die Winkel zwischen den ersten Führungsstangen 311 und den Tischplatten 111 sowie zwischen den ersten Führungsstangen und den zweiten Führungsstangen 321 jeweils verhältnismässig stumpf beziehungsweise gross.

In Fig. 2 sind die Schreibtische 11 in einer unteren Höheneinstellung gezeigt. Die Tischplatten 111 sind beispielsweise in einer Sitzposition verhältnismässig tief eingestellt. Die Kabelführungseinrichtungen 3 und insbesondere deren Verbindungselemente 33 beziehungsweise die Spiralfedern 333 davon sind dadurch verhältnismässig stark gebeugt. Dabei sind die Winkel zwischen den ersten Führungsstangen 311 und den Tischplatten 111 sowie zwischen den ersten Führungsstangen und den zweiten Führungsstangen 321 jeweils verhältnismässig spitz beziehungsweise klein. Im Vergleich zu der in Fig. 1 gezeigten oberen Höheneinstellung sind die ersten Führungselemente 31 zur Tischplatte 111 beziehungsweise zu den Tragteilen 22 und die zweiten Führungselemente 32 zum Fussteil 21 in Richtung der Vorderkante der zugehörigen Tischplatte 111 geschwenkt.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen.

Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Höhenverstellbares Möbel (1) mit einem auf dem Boden abstellbaren Fussteil (21), einem Oberteil (111), einer Stelleinrichtung und einer Kabelführungseinrichtung (3) zur geordneten Führung von Kabeln an dem Möbel (1), wobei
ein Abstand zwischen dem Fussteil (21) und dem Oberteil (111) mittels der Stellenrichtung veränderbar ist,
die Kabelführungseinrichtung (3) ein starres erstes Führungselement (31), ein starres zweites Führungselement (32) und ein verformbares Verbindungselement (33) umfasst,
das erste Führungselement (31) eine scharniergelenkartige erste Lagereinrichtung (312) aufweist, mittels welcher es am Oberteil (111) des Möbels (1) gelenkig oder gelenkartig gelagert ist, wobei die erste Lagereinrichtung (312) einen Achsstangenabschnitt umfasst, welcher sich durch eine Führung im Oberteil (111) des Möbels (1) erstreckt,
das zweite Führungselement (32) eine scharniergelenkartige zweite Lagereinrichtung (322) aufweist, mittels welcher es am Fussteil (21) des Möbels (1) gelenkig oder gelenkartig gelagert ist, wobei die zweite Lagereinrichtung (322) einen Achsstangenabschnitt umfasst, welcher sich durch eine Führung im Fussteil (21) des Möbels (1) erstreckt, und
das Verbindungselement (33) das erste Führungselement (31) mit dem zweiten Führungselement (32) zueinander bewegbar verbindet.

2. Höhenverstellbares Möbel (1) nach Anspruch 1, bei der das Verbindungselement (33) elastisch verformbar ist.

3. Höhenverstellbares Möbel (1) nach Anspruch 2, bei der das Verbindungselement (33) federnd ausgestaltet ist.

4. Höhenverstellbares Möbel (1) nach Anspruch 3, bei der das Verbindungselement (33) eine Spiralfeder (333) aufweist.

5. Höhenverstellbares Möbel (1) nach einem der vorangehenden Ansprüche, bei der das erste Führungselement (31) und das zweite Führungselement (32) längsförmig ausgebildet sind.

6. Höhenverstellbares Möbel (1) nach Anspruch 5, bei dem die erste Lagereinrichtung (312) nahe eines ersten Längsendes des ersten Führungselements (31) angeordnet ist, die zweite Lagereinrichtung (322) nahe eines ersten Längsendes des zweiten Führungselements (32) angeordnet ist und das Verbindungselement (33) dazu ausgestaltet ist, ein zweites Längsende des ersten Führungselements (31) mit einem zweiten Längsende des zweiten Führungselements (32) zu verbinden.

7. Höhenverstellbares Möbel (1) nach Anspruch 5 oder 6, bei der das erste Führungselement (31) und das zweite Führungselement (32) jeweils einen Stangenabschnitt (311, 321) aufweisen.

8. Höhenverstellbares Möbel (1) nach einem der vorangehenden Ansprüche, wobei die Kabelführungseinrichtung (3) eine Umhüllung umfasst, mit der das erste Führungselement, das zweite Führungselement (32) und das Verbindungselement (33) einfassbar sind.

9. Höhenverstellbares Möbel (1) nach Anspruch 8, bei der die Umhüllung schlauchartig ausgebildet ist.

10. Höhenverstellbares Möbel (1) nach einem der Ansprüche 1 bis 9, bei dem das erste Führungselement (31) quasi vertikal oberhalb der Lagerung des zweiten Führungselements am Fussteil (21) am Oberteil (111) gelagert ist.

## Claims

1. Height-adjustable piece of furniture (1) comprising a base part (21) which can be placed on the floor, an upper part (111), an adjusting arrangement, and a cable routing arrangement (3) for routing cables on the piece of furniture (1) in an organized manner, wherein
a distance between the base part (21) and the upper part (111) can be changed by means of the adjusting arrangement,
the cable routing arrangement (3) comprises a rigid first routing element (31), a rigid second routing element (32) and a deformable connecting element (33),
the first routing element (31) has a hinge-like first bearing arrangement (312), by means of which it is mounted in an articulated or hinged manner on the upper part (111) of the piece of furniture (1), wherein the first bearing arrangement (312) comprises an axle rod portion which extends through a guide in the upper part (111) of the piece of furniture (1),
the second routing element (32) has a hinge-like second bearing arrangement (322), by means of which it is mounted in an articulated or hinged manner on the base part (21) of the piece of furniture (1), wherein the second bearing arrangement (322) comprises an axle rod portion which extends through a guide in the base part (21) of the piece of furniture (1), and
the connecting element (33) connects the first routing element (31) to the second routing element (32) so as to be movable relative to one another.

2. Height-adjustable piece of furniture (1) according to claim 1, wherein the connecting element (33) is elastically deformable.

3. Height-adjustable piece of furniture (1) according to claim 2, wherein the connecting element (33) is resiliently arranged.

4. Height-adjustable piece of furniture (1) according to claim 3, wherein the connecting element (33) has a spiral spring (333).

5. Height-adjustable piece of furniture (1) according to any of the preceding claims, wherein the first routing element (31) and the second routing element (32) are longitudinal.

6. Height-adjustable piece of furniture (1) according to claim 5, wherein the first bearing arrangement (312) is arranged near a first longitudinal end of the first routing element (31), the second bearing arrangement (322) is arranged near a first longitudinal end of the second routing element (32), and the connecting element (33) is arranged to connect a second longitudinal end of the first routing element (31) to a second longitudinal end of the second routing element (32).

7. Height-adjustable piece of furniture (1) according to claim 5 or 6, wherein the first routing element (31) and the second routing element (32) each have a rod portion (311, 321).

8. Height-adjustable piece of furniture (1) according to any of the preceding claims, wherein the cable routing arrangement (3) comprises a sheath, by means of which the first routing element, the second routing element (32) and the connecting element (33) can be enclosed.

9. Height-adjustable piece of furniture (1) according to claim 8, wherein the sheath is tubular.

10. Height-adjustable piece of furniture (1) according to any of claims 1 to 9, wherein the first routing element (31) is mounted on the upper part (111) quasi vertically above the mounting of the second routing element on the base part (21).

## Revendications

1. Meuble (1) réglable en hauteur comportant une partie pied (21) pouvant être posée sur le sol, une partie supérieure (111), un dispositif de réglage et un dispositif de guidage de câbles (3) permettant de guider de manière ordonnée des câbles sur le meuble (1), dans lequel
une distance entre la partie pied (21) et la partie supérieure (111) peut être modifiée au moyen du dispositif de réglage,
le dispositif de guidage de câble (3) comprend un premier élément de guidage (31) rigide, un second élément de guidage (32) rigide et un élément de liaison (33) déformable,
le premier élément de guidage (31) comporte un premier dispositif d'appui (312) en forme de charnière, au moyen duquel il est monté articulé ou de manière articulée sur la partie supérieure (111) du meuble (1), dans lequel le premier dispositif d'appui (312) comprend un tronçon de tige d'arbre, lequel s'étend à travers un guide dans la partie supérieure (111) du meuble (1),
le second élément de guidage (32) comporte un second dispositif d'appui (322) en forme de charnière, au moyen duquel il est monté articulé ou de manière articulée sur la partie pied (21) du meuble (1), dans lequel le second dispositif d'appui (322) comprend un tronçon de tige d'arbre, lequel s'étend à travers un guide dans la partie pied (21) du meuble (1), et
l'élément de liaison (33) relie le premier élément de guidage (31) au second élément de guidage (32) de manière mobile l'un par rapport à l'autre.

2. Meuble (1) réglable en hauteur selon la revendication 1, dans lequel l'élément de liaison (33) est déformable élastiquement.

3. Meuble (1) réglable en hauteur selon la revendication 2, dans lequel l'élément de liaison (33) est conçu sous la forme d'un ressort.

4. Meuble (1) réglable en hauteur selon la revendication 3, dans lequel l'élément de liaison (33) comporte un ressort en spirale (333).

5. Meuble (1) réglable en hauteur selon l'une quelconque des revendications précédentes, dans lequel le premier élément de guidage (31) et le second élément de guidage (32) sont formés longitudinalement.

6. Meuble (1) réglable en hauteur selon la revendication 5, dans lequel le premier dispositif d'appui (312) est disposé à proximité d'une première extrémité longitudinale du premier élément de guidage (31), le second dispositif d'appui (322) est disposé à proximité d'une première extrémité longitudinale du second élément de guidage (32) et l'élément de liaison (33) est conçu pour relier une seconde extrémité longitudinale du premier élément de guidage (31) à une seconde extrémité longitudinale du second élément de guidage (32).

7. Meuble (1) réglable en hauteur selon la revendication 5 ou 6, dans lequel le premier élément de guidage (31) et le second élément de guidage (32) comportent respectivement un tronçon de tige (311, 321).

8. Meuble (1) réglable en hauteur selon l'une quelconque des revendications précédentes, dans lequel le dispositif de guidage de câbles (3) comprend une enveloppe avec laquelle le premier élément de guidage, le second élément de guidage (32) et l'élément de liaison (33) peuvent être entourés.

9. Meuble (1) réglable en hauteur selon la revendication 8, dans lequel l'enveloppe est formée tubulaire.

10. Meuble (1) réglable en hauteur selon l'une quelconque des revendications 1 à 9, dans lequel le premier élément de guidage (31) est monté quasi verticalement au-dessus de l'appui du second élément de guidage sur la partie pied (21) sur la partie supérieure (111).
